# EUROPEAN PATENT APPLICATION

(11) **EP 1 413 404 A2**
(43) Date of publication of application: **28.04.2004**
(21) Application number: 03256730.7
(22) Date of filing: 24.10.2003
(51) Int. Cl.: B25J 9/00, B25J 19/02, B25J 9/16, B23P 21/00, B07C 5/342, G06T 1/00

(54) **Object conveying system and conveying method using two robots**

(30) Priority: 25.10.2002 JP 2002311617; 18.03.2003 JP 2003073624
(71) Applicant: Fanuc Ltd, Minamitsuru-gun, Yamanashi 401-0597 (JP)
(72) Inventor: Watanabe, Atsushi, Suginami-ku Tokyo, 168-0072 (JP); Ban, Kazunori, Yamanashi, 401-0304 (JP)
(74) Representative: Billington, Lawrence Emlyn

(57) **Abstract**

An object conveying system and conveying method for conveying objects such as workpieces (W) by using two robots (1,30). A first robot (30) holds and positions a basket (71), in which workpieces (W) are randomly stacked, at a predetermined position. A second robot (1) is mounted with a visual sensor (10) for determining a position and/or an orientation of each workpiece (W), and holds a workpiece (W), based on the determined workpiece position and/or orientation. The second robot (1) takes out the workpiece from the basket (71) and delivers it to a processing machine (80). The basket (71) held by the first robot (30) does not require a position for placement, and hence workpieces (W) can be delivered to the processing machine (80) at a workpiece feed position above other equipment, so that object conveyance using robot can be easily realized even in a narrow space crowded with various equipment.

## Description

### BACKGROUND OF THE INVENTION

### 1. Field of the Invention

The present invention relates to an object conveying system and method for conveying an object such as a part, a workpiece, an article, a product, etc.

### 2. Description of Related Art

A handling robot is well known by which a conveyance object such as component, workpiece, etc. supplied to a predetermined position is held and delivered to the next process.

Also known is a system in which a position/orientation of each of conveyance objects that are randomly stacked in a container such as pallet or basket is detected by a visual sensor attached to a robot, and in accordance with the detected object position/orientation, a position/orientation of a robot hand is controlled so that the robot may hold the detected object. By means of the robot, the object is then taken out from the container, to be transported and delivered to the next process (see JP 2000-288974A, for example).

In this system, the visual sensor serves to detect the position/orientation of a conveyance object received in the container rather than a position of the container. Therefore, the container in which conveyance objects are packed must be positioned at a prescribed position within the operation range of the robot mounted with the visual sensor. When the container becomes empty, it must be replaced by a new container in which objects are stored.

A robot mounted with a visual sensor is also employed for packing conveyance objects into a container such as pallet or basket. In this case, after the container is positioned, information on a location in the container where no conveyance objects are present and/or information on a height of uppermost objects in the container is detected by the visual sensor, and in accordance with the detected information, a conveyance object held by a robot hand is packed into the container. When the container is full of objects, it must be taken out from the prescribed position and a new empty container must be positioned at that position.

As mentioned above, in a system using a single robot to take out or pack conveyance objects from or into a container, such container must be positioned at a predetermined position within the operation range of the robot. In addition, the delivery of a taken-out object to the next process must be made at a position within the operation range of the robot. Thus, the robot must be arranged to close to a machine used for the next process. For example, in a system for conveying workpieces to be machined, a robot and a processing machine must be installed to close to each other, and their peripheral equipment must also be installed to close to them. In addition, access spaces permitting operators to access the robot, processing machine, etc. must be provided, and therefore, the resultant system arrangement is crowded with pieces of equipment installed in a relatively narrow space. This makes it difficult to place a large number of containers in advance within the operation range of the robot.

On the other hand, in the aforementioned system using a single robot for delivering conveyance objects that are taken out from a container to a processing machine, or for packing conveyance objects that are received from a processing machine into a container, the operation of replacing a container becoming empty or full of received objects by a new container full of objects or a new empty container must be made at a prescribed position within the operation range of the robot. Since a large number of containers cannot be placed in advance within the operation range of the robot, this system is difficult to operate for a long time. And usage of conveyors, etc. for transportation of containers to within the operation range of the robot is disadvantageous in that a large space is required for installation of conveyers, etc.

### SUMMARY OF THE INVENTION

The present invention provides an object conveying system and method for easily conveying conveyance objects using robots even in a narrow space crowded with apparatuses.

According to one aspect of this invention, an object conveying system comprises: a first robot for holding and taking out a container containing objects positioned therein from a first process, and for conveying and positioning the held container at a predetermined position; and a second robot for holding and taking out an object contained in the container held by said first robot and conveying the held object to a second process, said predetermined position being within an operation range of said second robot. In this system, an operation of conveying a conveyance object is performed under cooperation of the two robots.

In this object conveying system, the first robot may change a position and/or an orientation of the held container for taking out of the object by the second robot. In this case, the object can be easily taken out from the container.

According to another aspect of this invention, an object conveying system comprises: a first robot for holding and taking out a container containing objects from a first process, and for conveying and positioning the held container at a predetermined position; and a second robot with a sensor, for holding and taking out an object contained in the container held by said first robot by recognizing a position and/or an orientation of the object using the sensor, and conveying the held object to a second process, said predetermined position being within an operation range of said second robot. This system is suitable, especially, for taking out an object from a container in which objects are randomly stacked.

In this object conveying system, the first robot may change a position and/or an orientation of the held container for taking out of the object by the second robot and/or for recognizing of the position and/or the orientation of the object using a sensor. In this case, the position/an orientation of the object can be easily recognized and/or the object can be easily taken out from the container

In each of the above-described object conveying systems, the first robot may also have a sensor mounted thereon, and may hold the container based on a position of the container detected by the sensor. When the object is taken out from the container, a signal indicating the number of objects taken out from the container or the number of objects remaining in the container may be output to the outside of the system. Alternatively, when the object is taken out from the container, a signal may be output to the outside of the system, if the number of objects taken out from the container or the number of objects remaining in the container satisfies a predetermined comparison condition. Further, when the second robot takes out the object, the second robot may notify the first robot that the second robot holds the object. Alternatively, when the second robot takes out the object, the second robot may notify the second process that the second robot holds the object or that the second robot reaches such a region that the second process has to start to make a preparation. The second robot may take out the object from the container, and may then convey the taken out object to a temporary placing table on which the taken out object is temporally placed. The first robot may change a position and/or an orientation of the held container so as to thereby assist the second robot to eliminate an abnormality that is caused in taking out the obj ect from the container and unable to be eliminated by the second robot. The sensor may be a visual sensor or a three-dimensional position sensor.

According to still another aspect, an object conveying system comprises: a first robot for holding and taking out a container from a second process, and for carrying and positioning the held container at a predetermined position; and a second robot for sequentially holding and taking out objects from a first process and placing the objects in the container held by said first robot according to a predetermined pattern, wherein said first robot conveys the container in which the objects are placed to the second process.

In this object conveying system, the first robot may change a position and/or an orientation of the container for placing of the object in the container by the second robot.

According to a further aspect of this invention, an object conveying system comprises: a first robot for holding and taking out a container from a second process, and for conveying and positioning the held container at a predetermined position; and a second robot with a sensor, for sequentially holding and taking out objects from a first process and placing the objects in the container held by said first robot by recognizing a position at which the object is to be placed using the sensor, wherein said first robot conveys the container in which the objects are placed to the second process.

In this object conveying system, the first robot may change a position and/or an orientation of the container for placing of the object in the container by the second robot and/or for recognizing of the position in the container at which the object is to be placed using the sensor.

In each of the object conveying systems, the first robot may also have a sensor mounted thereon, and conveys the container to the second process by recognizing a position at which the container is to be stored using the sensor. When the object is placed in the container, a signal indicating the number of objects placed in the container or the number of objects remaining in the container may be output to the outside of the system. Alternatively, when the object is placed in the container, a signal may be output to the outside of the system, if the number of objects placed in the container or the number of objects remaining in the container satisfies a predetermined comparison condition. The second robot may notify the first robot that the object has been placed in the container. The second robot may take out an object from a temporary placing table on which the object is temporally placed, and place the object in the container held by the first robot. The first robot may change a position and/or an orientation of the container so as to assist the second robot to eliminate an abnormality that is caused in placing the object in the container and unable to be eliminated by the second robot. The sensor may be a visual sensor or a three-dimensional position sensor.

The present invention provides an object conveying method comprising the steps of: holding and taking out a container containing objects positioned therein from a first process, and conveying and positioning the held container at a predetermined position within an operation range of a second robot, using a first robot; and holding and taking out an object contained in the container held by the first robot, and conveying the held object to a second process using the second robot.

In this object conveying method, the step of taking out the object by the second robot may include a step of changing a position and/or an orientation of the container held by the first robot.

The present invention also provides an object conveying method comprising the steps of: holding and taking out a container containing objects from a first process, and conveying and positioning the held container at a predetermined position within an operation range of a second robot, using a first robot; and holding and taking out an object contained in the container held by the first robot using a second robot by recognizing a position and/or an orientation of the object using a sensor provided at the second robot, and conveying the held object to a second process by the second robot.

In this object conveying method, the step of taking out the object by the second robot by recognizing the position and/or the orientation of the object using the sensor may include a step of changing a position and/or an orientation of the container held by the first robot.

In each of the object conveying methods, the step of taking out the container by the first robot may include a step of holding the container based on a position of the container detected by a sensor mounted on the first robot. Each object conveying method may further include a step of outputting a signal indicating the number of objects taken out from the container or the number of objects remaining in the container when the step of taking out the object from the container by the second robot is performed. Alternatively, each object conveying method may further include a step of outputting a signal, if the number of objects taken out from the container or the number of objects remaining in the container satisfies a predetermined comparison condition when the step of taking out the object from the container by the second robot is performed. The step of taking out the object from the container by the second robot may include a step of notifying the first robot that the second robot holds the object. Alternatively, the step of taking the object from the container by the second robot may include a step of notifying the second process that the second robot holds the object or that the second robot reaches such a region that the second process has to start to make a preparation. The step of conveying the object taken out from the container to the second process by the second robot may include a step of conveying the taken-out object to a temporary placing table on which the taken-out object is temporally placed. Each of the object conveying methods may further include a step of changing a position and/or an orientation of the container held by the first robot so as to assist the second robot to eliminate an abnormality that is caused in taking out the object from the container by the second robot and unable to be eliminated by the second robot. The sensor may be a visual sensor or a three-dimensional position sensor.

According to a further aspect of this invention, there is provided an object conveying method comprising the steps of: holding and taking out a container from a second process, and for conveying and positioning the held container at a predetermined position using a first robot; sequentially holding and taking out objects from the first process and placing the objects in the container held by said first robot according to a predetermined pattern, using a second robot; and conveying the container in which the obj ects are placed to a second process by the first robot.

This object conveying method may further include a step of changing a position and/or an orientation of the container held by the first robot when the object is placed in the container by the second robot.

According to a further aspect of this invention, there is provided an object conveying method comprising the steps of: holding and taking out a container from a second process, and for conveying and positioning the held container at a predetermined position using a first robot; sequentially holding and taking out objects from a first process and placing the objects in the container held by said first robot using a second robot by recognizing a position at which the object is to be placed using a sensor provided at the second robot; and conveying the container in which the objects are placed to the second process by the first robot.

This object conveying method may further include a step of changing a position and/or an orientation of the container held by the first robot for placing of the object in the container by the second robot and/or for recognizing of the position in the container at which the object is to be placed using the sensor.

In each of the object conveying methods, the step of conveying the container to the second process by the first robot may include a step of recognizing a position at which the container is to be stored using a sensor mounted on the first robot. Each object conveying method may further include a step of outputting a signal indicating the number of objects placed in the container or the number of objects remaining in the container when the object is placed in the container. Alternatively, each object conveying method may further include a step of outputting a signal if the number of objects placed in the container or the number of objects remaining in the container satisfies a predetermined comparison condition when the object is placed in the container. Each object conveying method may further including a step of notifying the first robot that the object has been placed in the container by the second robot, or may further include a step of taking out the object by the second robot from a temporary placing table on which the object is temporally held, and placing the object in the container held by the first robot. Each object conveying method may further include a step of changing a position and/or an orientation of the container held by the first robot so as to assist the second robot to eliminate an abnormality that is caused in placing the object in the container and unable to be eliminated by the second robot. The sensor may be a visual sensor or a three-dimensional position sensor.

### BRIEF DESCRIPTION OF THE DRAWINGS

FIG. 1 is a perspective view showing a basic overall arrangement of an object conveying system for embodying an object conveying method of this invention;
FIG. 2 is a schematic view showing an object conveying system according to a first embodiment of this invention;
FIG. 3 is a flowchart of operational processing executed by a robot for holding a container in the first embodiment;
FIG. 4 is a flowchart of operational processing executed by another robot for taking out a workpiece from a container in the first embodiment;
FIG. 5 is a schematic view showing an object conveying system according to a second embodiment of this invention;
FIG. 6 is a flowchart of operational processing executed by a robot for holding a container in the second embodiment;
FIG. 7 is a flowchart of operational processing executed by another robot for packing a workpiece into a container in the second embodiment;
FIG. 8 is a flowchart of error recovery processing performed at the time of workpiece removal being disabled;
FIG. 9 is a view for explaining the outline of an operational sequence according to a third embodiment of this invention;
FIG. 10 is a flowchart showing part of operational processing executed by a robot for handling a workpiece container in the third embodiment;
FIG. 11 is a flowchart showing the remaining of the operational processing partly shown in FIG. 10;
FIG. 12 is a flowchart showing part of operational processing executed by another robot for handling a workpiece in the third embodiment; and
FIG. 13 is a flowchart showing the remaining of the operational processing partly shown in FIG. 12.

### DETAILED DESCRIPTION

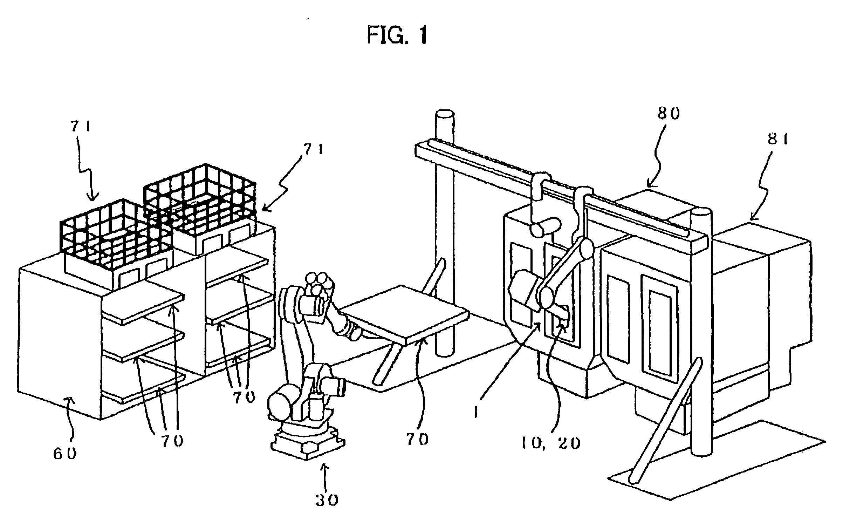

At first, a typical arrangement of an object conveying system for embodying an object conveying method of this invention will be described. As shown in FIG. 1, the object conveying system comprises a robot 30 for taking out a container such as pallet 70 or basket 71 from a shelf 60, and a robot 1 for taking out a conveyance object (hereinafter referred to as workpiece) from the container 70 or 71 and feeding the same to a processing machine 80 or 81.

Workpieces to be machined are stacked on pallets 70 or in baskets 71, and these containers 70, 71 are placed in or on the shelf 60 by an operator or by using a pallet feed conveyor, etc., not shown.

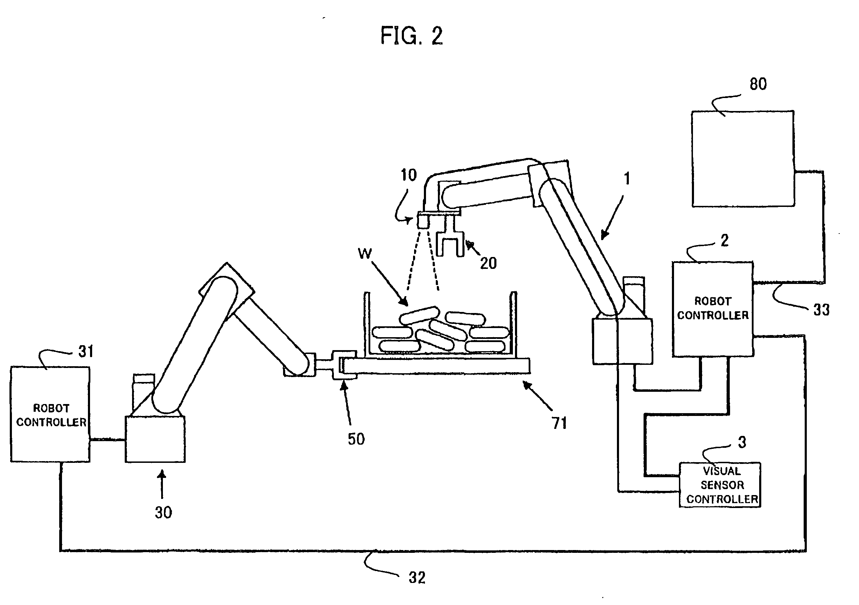

The robot 30 holds, with its hand 50 (refer to FIG. 2), a container 70 or 71 in which workpieces are stored, and takes out it from the shelf 60. While being kept held by the robot 30, the taken-out container 70 or 71 is positioned by the robot 30 at a prescribed position within the operation range of another robot 1.

The robot 1 is mounted at its arm end with a visual sensor 10 for recognizing a position/orientation of each individual workpiece loaded in the container 70 or 71, takes out the recognized workpiece by its hand 20 from the container, and feeds the taken-out workpiece to the processing machine 80 or 81.

The robots 1 and 30 also cooperate with each other to sequentially pack workpieces machined by the processing machine 80 or 81 into a container, and transport the container becoming full of the machined workpieces to the shelf 60.

The above is the outline of the object conveying system.

FIG. 2 shows an object conveying system according to a first embodiment of this invention, which, instead of the double housing robot 1 used in the system shown in FIG. 1, comprises an articulated robot 1 similar to the robot 30 shown in FIG. 1.

A robot 30 and a robot controller 31 shown in FIG. 2 constitute a known teaching-playback robot that serves as a first robot for taking out a container and that has functions of preparing, storing, teaching, and playing back a program with which the robot operates. This applies to the robot 1 and a robot controller 2, which constitute a second robot for taking out a conveyance object from a container and for feeding the taken-out object to the next process.

The robot controllers 31 is connected with a robot controller 2 through an I/O signal line 32, and each controller has a so-called known interlock function to suspend the execution of a program until an I/O output from another robot is settled to a prescribed state.

The robot 1 is provided at its end with a hand 20 and a visual sensor 10, and recognizes by the sensor 10 a position/orientation of a workpiece W loaded on or in the container 70 or 71 held by the robot 30. The visual sensor 10 may typically be a CCD camera used in combination with a visual sensor controller 3 for processing a workpiece image captured by the CCD camera to find, among template images taught beforehand to the controller, a template image having the same shape as the captured image, thereby detecting a position/orientation of a workpiece concerned. Alternatively, the visual sensor 10 may be a 3D-visual sensor such as one disclosed in JP-A-2000-288974 that is suitable in particular for sequentially detecting workpieces stacked in a basket as shown in FIG. 2.

The visual sensor 10 delivers information indicative of the detected workpiece position/orientation to the robot controller 2 via a communication line.

The robot controller 31 is stored with operation programs mentioned later that are taught to the controller. Depending on the kind of workpiece W to be machined, the robot controller 31 selects an appropriate operation program for operating the robot 30 to take out a desired container 70 or 71 from the shelf 60 and transport the same to a position within the operation range of another robot 1. Such operation program may be selected and started by manually operating a teaching operation panel (not shown) or by inputting a program selection/start signal from an external sequencer to the controller.

The robot controller 2 operates in accordance with a later-mentioned program taught in advance, and controls the operating position of the robot 1 based on information on the position/orientation of workpiece W supplied from the visual sensor controller 3, whereby a workpiece is held by the hand 20 of the robot 1, to be taken out from a container 70 or 71 and fed to the processing machine 80 or 81.

In this embodiment, it is assumed that workpieces W are randomly stacked in respective containers 70 or 71 (especially, basket 71), the container 70 or 71 is divided into four regions, i.e., upper, lower, left and right regions, as seen from above, and the visual sensor 10 captures images of these regions in sequence in detecting the position/orientation of workpiece W.

To this end, the robot 30 is operated to move the container 70 or 71 so that the centers of the four regions of the container are sequentially brought to be consistent with the optical axis of the visual sensor 10. When a detected workpiece W is about to be taken out from the container by the robot 1, the robot 30 is operated to lift the container, so that the robot 1 may easily hold the workpiece W by its hand 20. Of course, the visual sensor 10 can capture an image of the entire region of the container 70 or 71 at a time with accuracy, if the size of the container is small enough to the extent that the entire region falls within the field of view of the visual sensor. If there is no substantial limitation on the operation range of the robot 1, the robot 1 may be operated to move the visual sensor 10 to appropriate positions in sequence to capture images of the respective regions of the container, instead of using the robot 30 to move the container. Also, the robot 1 may be operated to hold a workpiece by its hand 20 and take out the workpiece from the container, in a state where the container is kept held at the prescribed position by the robot 30, instead of being lifted toward the robot 1.

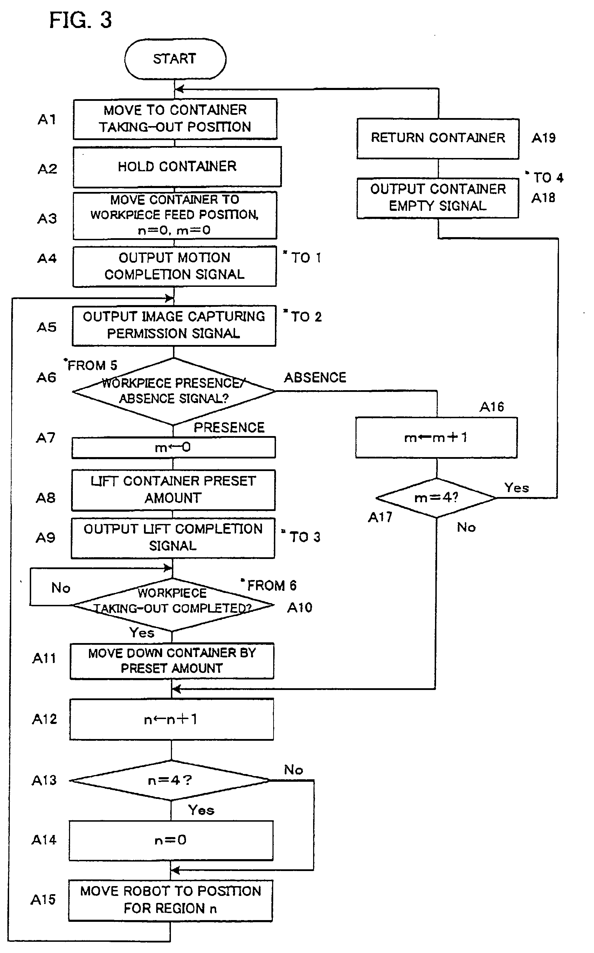

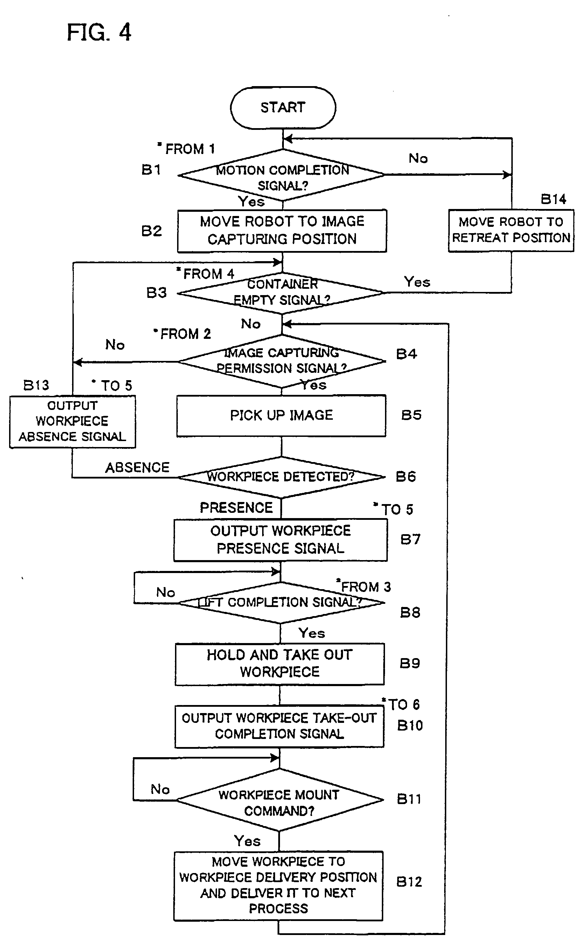

When an operation command is input, a processor of the robot controller 31 starts to execute the processing shown in FIG. 3, and a processor of the robot controller 2 starts to execute the processing shown in FIG. 4.

The processor of the robot controller 31 moves the robot 30 to an instructed container taking-out position (Step A1), holds an associated container by the robot hand 50 (Step A2), moves and positions the container to and at a workpiece feed position for the robot 1, and sets indexes n and m, mentioned later, to 0 (Step A3). In the example shown in FIG. 2, a basket 71 serves as a container.

Next, the robot controller 31 transmits a motion completion signal, indicative of the container having already been moved to the feed position, to the robot controller 2 via an I/O signal line 32 (Step A4), and also transmits an image capturing permission signal thereto (Step A5).

The robot controller 2 monitors whether a motion completion signal is transmitted (Step B1), and moves the robot 1 to an image capturing position in response to the motion completion signal being transmitted (Step B2). It also monitors whether a container empty signal is transmitted (Step B3), which signal is to be transmitted when no workpiece W is stored in the container (basket 71), and monitors whether an image capturing permission signal is transmitted (Step B4). Since workpieces W are first loaded in the basket 71, the robot controller 2 does not receive the container empty signal, but receives the image capturing permission signal transmitted at Step A5, and accordingly the flow advances from Step B4 to Step B5 where the visual sensor 10 captures an image from which a position/orientation of workpiece W is determined.

Next, the robot controller 2 determines whether a position/orientation of workpiece W has been detected (Step B6), and if so, transmits a workpiece presence signal to the robot controller 31 via the I/O signal line 32 (Step B7).

When receiving the workpiece presence signal (Step A6), the robot controller 31 sets index m to 0 (Step A7), and operates the robot 30 to lift the container (basket 71) by a preset amount (Step A8). After completion of the container being lifted, the robot controller 31 transmits a lift completion signal to the robot controller 2 (Step A9).

When receiving the lift completion signal (Step B8), the robot controller 2 corrects a position/orientation of the robot hand 20 on the basis of the position/orientation of workpiece W determined at Step B5, and operates the robot 1 to hold the detected workpiece W by the hand 20 and take out the same from the container (Step B9). Then, the robot controller 2 transmits a workpiece removal completion signal to the robot controller 31 (Step B10), and awaits a workpiece mount command being input from controlling means for the next process, i.e., a controller for the processing machine 80 (Step B 11). When the workpiece mount command is input, the robot controller 2 operates the robot 1 to move the workpiece to a workpiece delivery position where the workpiece is delivered to the processing machine 80 to perform the next process (Step B12). Whereupon the flow returns to Step B4.

Meanwhile, at Step B 10, the robot controller 2 may transmit the workpiece removal completion signal to the controlling means for the next process rather than to the robot controller 31.

The workpiece removal completion signal may be output to the controlling means for the next process when the workpiece is held by the robot hand 20 or when the robot hand 20 holding the workpiece passes through a prescribed position above the container (basket 71). In this case, the controlling means for the next process outputs the workpiece mount command to the robot controller 2 after receiving the workpiece removal completion signal from the robot controller 2, whereby the foregoing sequence control can be made more securely.

When receiving the workpiece removal completion signal (Step A10), the robot controller 31 operates the robot 30 to move down the container (basket 71) by the preset amount by which it was moved up at Step A8 (Step A11), and increments the index n by 1 (Step A12). If the index n is equal to 4 (Step A13), the index n is set to 0 (Step A14). If the index n is not equal to 4, the flow advances to Step A15 where the robot 30 is operated to move the container (basket 71) so as to bring the center of the region, corresponding to the index n, of the container to be consistent with the optical axis of the visual sensor 10. In this case, the container moves horizontally without changing a height position, so that the container region specified by the index n may fall within the field of view of the visual sensor 10. Whereupon the flow returns to Step A5.

Subsequently, the robot controller 31 repeatedly executes the processing of Steps A5-A15. Thus, the container (basket 71) is translationally moved, so that the container regions individually corresponding to the index n (=0, 1, 2, 3) are sequentially positioned to be consistent with the visual sensor 10. On the other hand, the robot controller 2 operates the robot 1, the visual sensor 10, and the visual sensor controller 3, so that workpieces W are taken out sequentially from the container regions corresponding to n=0, 1, 2, 3 and delivered to the next process, while a position/orientation of each individual workpiece W is determined based on a captured image of a corresponding container region.

In this manner, workpieces W are taken out from the respective regions of the container. When a position/orientation of workpiece W is not detected from an image captured by the visual sensor 10, the robot controller 2 transmits a workpiece absence signal to the robot controller 31 (Step B13), and the flow returns to Step B3.

When the robot controller 31 receives the workpiece absence signal at Step A5, the flow advances from Step A5 to Step A16 where the index m is incremented by 1, and whether the index m reaches a value of 4 is determined (Step A17). If not so, the flow advances to Step A12, whereupon processing of Step A12 and subsequent Steps is performed. Thus, the robot controller 31 repeatedly carries out the processing of Steps A5, A6, A17, A17 and A12-A15 each time it receives the workpiece absence signal until the index m reaches a value of 4. On the other hand, the robot controller 2 repeatedly carries out the processing of Steps B3-B6 and B13.

When a workpiece presence signal is delivered from the robot controller 2 before the index m reaches a value of 4 during the processing being repeatedly carried out as mentioned above (Step B7), the robot controller 31 executes the processing of Step A7 and subsequent Steps, whereas the robot controller 2 executes the processing of Step B9 and subsequent Steps.

On the other hand, if the index m reaches a value of 4 while no workpiece W is detected, this indicates that no workpiece W in the container (basket 71) can be detected from images picked up with respect to container regions individually corresponding to n=0, 1, 2 and 3. In that case, the flow advances from Step A17 to Step A18 wherein the robot controller 31 transmits a container empty signal to the robot controller 2, and operates the robot 30 to return the empty container 71 by placing it on an empty container placement position that is provided for example in the shelf 60 (Step A19). Whereupon, the flow returns to Step A1.

When receiving the container empty signal, the robot controller 2 operates the robot 1 to a predetermined retreat position (Step B 14), and the flow returns to Step B1.

Thus, a new container (basket 71) is taken out from the shelf 60, and workpieces W stored in the new container are fed in sequence to the processing machine 80 for the next process.

If a stop command is input to the robot controllers 31 and 2, a shift is made to stop processing. In the stop processing, if a workpiece W is held by the robot hand 20, the robot controller 2 operates the robot 1 to return the workpiece to the container (basket 71), and moves the robot 1 to its retreat position. The robot controller 31 operates the robot 30 to return the container (basket 71) to the empty container placement position, moves the robot 30 to its standby position, and stops the operation of the robot 30. More detailed explanations on the stop processing are omitted.

In the first embodiment, the container (basket 71) divided into four regions is moved horizontally to change its position so as to place these four regions are framed in sequence within the field of view of the visual sensor 10. However, depending on container's shape, the container may be rotated around its vertical axis to change the orientation of the container so as to sequentially place the container regions within the field of view of the visual sensor, instead of translationally moving the same. In that case, at Step A15 in FIG. 3, the container is rotated so that the n'th container region is placed in position, instead of translationally moving the container to place the n'th container region in position.

In the first embodiment and the just-mentioned modification, the container (basket 71) is lifted by a prescribed amount when a workpiece W is about to be held and taken out from the container, in addition to horizontally (linearly or rotationally) moving the container so that each of the four container region falls within the field of view of the visual sensor. Alternatively, the robot 30 may be operated to simply position and retain the container (basket 71) at a prescribed position, if the entire region of the container can be framed within the field of view of the visual sensor and the robot 1 has its operation range wide enough to hold a workpiece by the hand 20 without the need of lifting the container.

In this case, the processing at Steps A7-A15 and A16-A18 is unnecessary in the flow shown in FIG. 3. Specifically, the flow returns to Step A5 if a workpiece presence signal is determined at Step A6, whereas Step A19 is entered if a workpiece absence signal is determined at Step A6. The processing at Step A3 to reset the indexes n and m to 0 is also unnecessary.

In the flow shown in FIG. 4 relating to the robot 1, the processing of Steps B3, B8 and B10 is unnecessary, and when a workpiece W cannot be detected from picked-up images, the flow advances from Step B 13 to Step B 14. And shift is made from Step B2 directly to Step B4, from Step S7 to Step B9, and from Step B9 to Step B12.

Meanwhile, in this case, the robot 30 is required to hold the container (basket 71) at a prescribed position for a long time. Thus, after the container is positioned at the prescribed position, brake is applied to the respective axes of the robot 30 and the respective axis servomotors are made into a servo-off state where they are stopped from operating. When the container is returned to the original position in the shelf 60, the axis servomotors are made into a servo-on state where they are enabled to operate, with the brake released. In other words, the processing of applying brake and establishing a servo-off state is provided between Steps A3 and A4, and the processing of establishing a servo-off state and releasing the brake is provided prior to Step A19.

In case that the field of view of the visual sensor 10 is not large enough to see the entire region of the container (basket 71) at a time, the entire region may be divided into a desired number of regions such that each individual region falls within the field of view by moving the robot 1 in its operation range.

In the first embodiment, a case has been explained where a container (basket 71) is positioned at a workpiece removal position for the robot 1, with workpieces W serving as conveyance objects randomly stacked in the container. Alternatively, workpieces may be orderly arranged in a container such as a basket 71, etc. In that case, the container is only required to be positioned and held by the robot 30 at a prescribed position, without the need of detecting a position/orientation of each individual workpiece. As conventionally known, the robot 1 takes out each workpiece from the container in accordance with information on the position/orientation of each of workpieces that are orderly arranged. If one or more of workpieces in the container (such as basket 71) are located outside the operation range of the robot 1, the container is horizontally moved by the robot 30 so that the one or more workpieces are brought into within the operation range of the robot 1, whereby the flexibility of the object conveying system is improved.

The above-mentioned component conveying system may be designed to provide an external computer for production control or a sequencer with output data indicating the number of components taken out from or remaining in a container, which data is useful in monitoring a state of a production line. When the number of remaining components reduces to a predetermined value, a further signal may be output to the outside to notify that the timing of component supplement or container replacement is approached, whereby such supplement and/or replacement can be made without dead time, resulting in improved production efficiency.

To this end, the flow shown in FIG. 3 and relevant system configuration may be slightly modified. When a container (basket 71) is placed on the shelf 60, the number of components (workpieces) housed in the container is set to a register in the robot controller 31, for instance. At Steps A1-A3, the container is taken out from the shelf 60 and positioned at a workpiece feed position under the control of the robot controller 31. When the container is positioned at that position, a counter in the robot controller 31 for counting the number of workpieces taken out from the container is set to 0. Subsequently, the robot controller 31 increments the count in the counter by 1 at Step A11 each time it receives a workpiece removal completion signal at Step A10, and outputs the renewed count in the counter to an external production control computer or a sequencer through an I/O signal line (not shown in FIG. 2). Instead of outputting the number of taken-out workpieces, it may output the number of workpieces remaining in the container that is obtained by subtracting the count in the counter from the value in the register indicating the number of workpieces initially stored in the container.

An external production control computer or a sequencer may be notified that the timing of workpiece supplement and/or container replacement is approached. To this end, an I/O signal is output to them when a prescribed condition is satisfied in respect of the number of taken-out workpieces indicated by the count in the counter or the number of remaining workpieces obtained by the aforesaid subtraction. For instance, such I/O signal may be output when the number of taken-out workpieces is equal to or greater than a predetermined value or when the number of remaining workpieces is equal to or less than a predetermined value. The processing of outputting the I/O signal may be made at Step A11.

In another modification of the first embodiment, containers (pallets 70 and/or baskets 71) may be randomly placed in or on the shelf 60, with variations in their position and/or orientation. In this case, the position and/or orientation of that one of containers which is about to be taken out from the shelf 60 is detected using a sensor.

To this end, the robot 30 is provided with a visual sensor and a sensor controller, individually corresponding to the sensor 10 and the sensor controller 3 for the robot 1, which cooperate with each other to detect a position/orientation of a portion of a container 70 or 71 held by the robot 30 at Step A2 in FIG. 3. The detected position/orientation is used to correct a position at which the robot 30 holds the container.

By way of example, in order to detect such holding position, a shape of a pallet portion (container portion) to be held by the hand 50 of the robot 30 is taught in the form of a template image to the sensor controller, as in the case of detecting a position/orientation of workpiece W. From an image captured by the visual sensor, the sensor controller detects a pallet portion having the same shape as that of the template image, whereby the pallet portion to be gripped by the robot can be determined with accuracy. Alternatively, positions of pallet comer portions may be detected to accurately determine a position/orientation of the entire pallet. Since these methods are well known in this field, further explanations will be omitted.

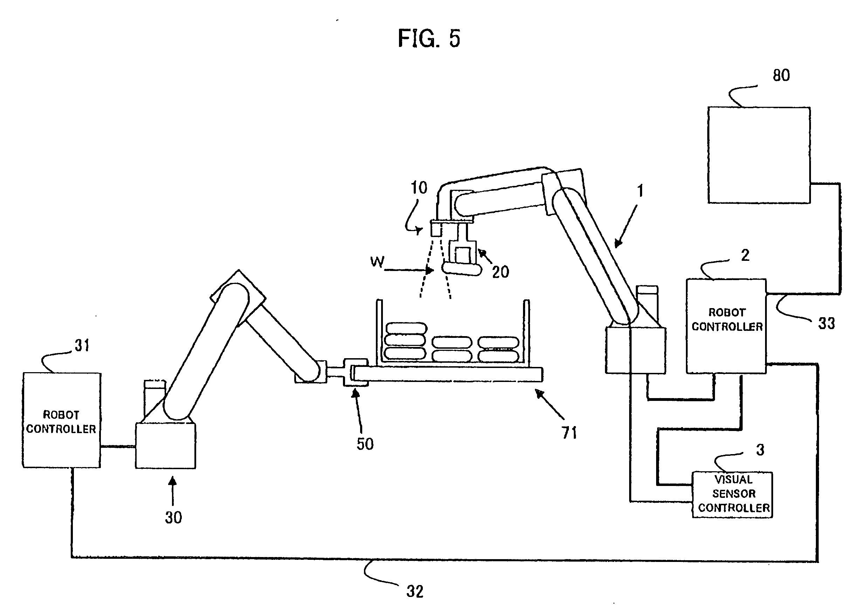

With reference to FIG. 5, an explanation will be given on an object conveying system according to a second embodiment of this invention that embodies a method for orderly packing objects such as workpieces machined by a processing machine, etc. into a container, unlike the first embodiment in which objects such as workpieces to be machined are taken out from a container and delivered to the next process.

In FIG. 5, when a processing machine 80 completes machining of a workpiece, an I/O signal serving as a machining completion signal is transmitted to a robot controller 2 through an I/O signal line 33. In response to this, the robot controller 2 operates a robot 1 to take out the machined workpiece W from the processing machine 80, and operates a visual sensor 10 and a visual sensor controller 3, so as to detect information on a location in the basket 71 held by the robot 30 in which no workpiece is present and/or information on height of uppermost workpieces in the basket. In accordance with the information, the robot 1 is operated to pack the taken-out workpiece into the basket 71. When the basket 71 becomes full of workpieces, a container replacement signal is delivered to the robot controller 2 which, in response to this signal, operates the robot 30 to transport the basket 71 to its original position on a shelf, not shown, corresponding to the shelf 60 in FIG. 1.

In this manner, under the control of the robot controllers 2 and 31, the robots 1 and 30 cooperate with each other to orderly pack workpieces machined by the processing machine 80 into the basket 71 which is then transported to the shelf.

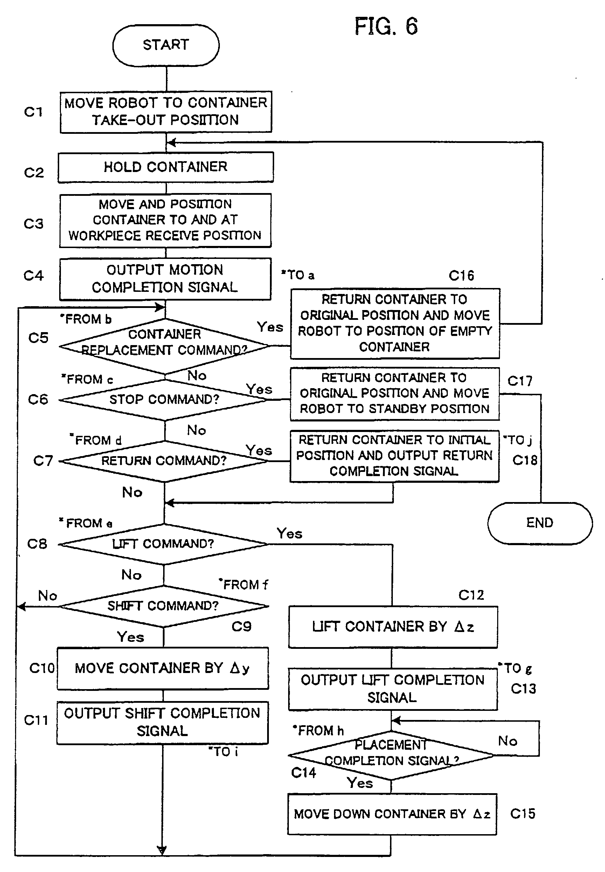

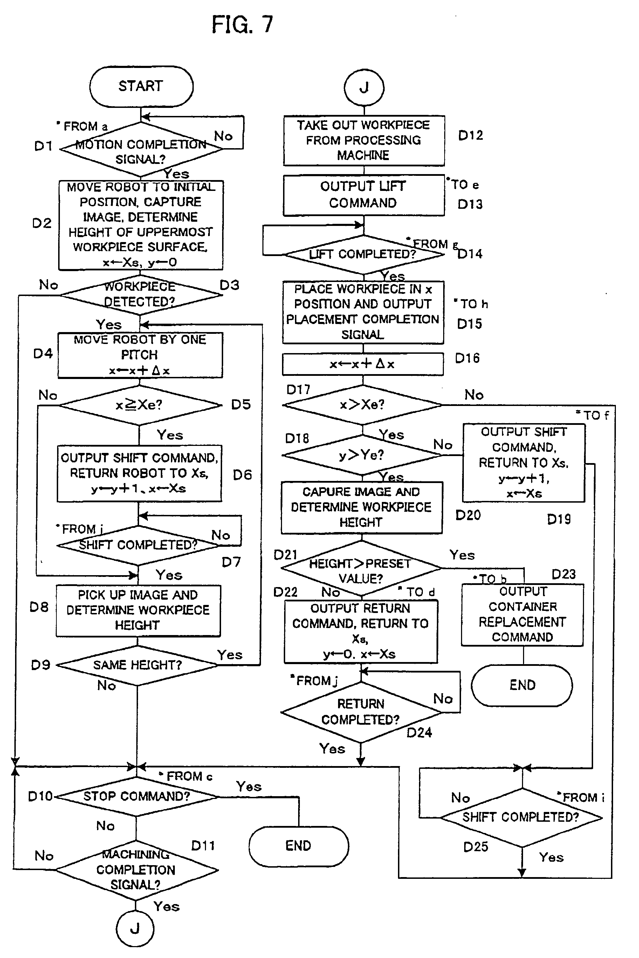

Referring to FIGS. 6 and 7, operations of the object conveying system shown in FIG. 5 will be explained in detail.

When an operation command is input that specifies a container to be used, a processor of the robot controller 31 starts to execute the processing shown in FIG. 6, and a processor of the robot controller 2 starts to execute the processing shown in FIG. 7.

Under the control of the processor of the robot controller 31, the robot 30 (specifically, its robot hand 50) is moved to a container removal position for the specified container in the shelf (Step C1), the robot hand 50 holds the container (Step C2), and the robot 30 is moved from the shelf to a workpiece receive position, so that the container is positioned at the workpiece receive position (Step C3). In the example shown in FIG. 5, a basket 71 serves as a container.

Next, the processor of the robot controller 31 transmits a motion completion signal, indicating that the container has been moved to the workpiece receive position, to the robot controller 2 via an I/O signal line 32 (Step C4), and sequentially determines whether or not a container replacement command, stop command, return command, lift command, and shift command are input from the robot controller 2 through the I/O signal line 32 (Steps C5-C9).

The robot controller 2 monitors whether a motion completion signal is transmitted from the robot controller 31 (Step D1), and in response to the transmitted motion completion signal, moves the robot 1 to a predetermined initial position at which the robot 1 can start to pack a first workpiece W into the container if it is empty. At the initial robot position, the visual sensor 10 attached to the robot 1 captures an image of the inside of the container, and based on the image, a height of uppermost workpiece surface is determined and stored. Further, an initial X-axis position Xs of the robot 1 is stored in a register x, and a register y is set to 0, which stores information indicating the number of times by which a Y-axis movement of the robot 30 is made (Step D2). In this embodiment, workpieces W are orderly arranged and packed in a basket 71 by moving the robot 1 (specifically, its robot hand 20) in the X-axis direction with a prescribed pitch and by moving a predetermined number of times the robot 30 (specifically, its robot hand 50 holding the basket) with a prescribed pitch in the direction of Y-axis perpendicular to the X-axis.

Next, a determination is made as to whether a workpiece W is detected based on the image picked up at Step D2 (Step D3). If no workpiece is detected, it is determined that the basket 71 is empty, and the flow advances to Step D10. In this case, the robot 30 is positioned at the initial position to await for start of a first workpiece being packed into the empty basket 71. On the other hand, if a workpiece is detected at Step D3, it is determined that the basket is partially packed with one or more workpieces, and the robot controllers 2, 31 start the processing for determining positions of the robots 1, 30 at which the next workpiece (a first workpiece for a case where the basket is initially packed with one or more workpieces) is to be packed into the basket 71.

Specifically, the robot 1 is moved by a prescribed pitch Δx in the X-axis direction, the pitch Δx is added to a stored value in the register x (Step D4), and whether the stored value in the register x is equal to or larger than a preset value Xe is determined (Step D5). If the stored value is not equal to or larger than the preset value, the flow advances to Step D8 where an image is picked up and a height of uppermost workpiece surface is determined. Then, a determination is made as to whether the determined height is consistent with the height determined at Step D2 for the initial robot position (Step D9), and if the answer to this determination is yes, the flow returns to Step D4. Subsequently, the processing of Steps D4-D9 is repeatedly executed. If it is determined at Step D5 that the stored value in the register x is equal to or larger than the preset value Xe, so that the limit of X-axis position of the basket, beyond which a workpiece cannot be packed into the basket, is reached, the robot 1 is returned to the initial position Xs, and a shift command is output to the robot controller 31 via the I/O signal line 32. The initial position Xs is stored in the register x, and the stored value in the register y is incremented by one (Step D6). Whereupon, whether a shift completion signal is transmitted from the robot controller 31 is determined (Step D7).

On the other hand, the robot controller 31 operates the robot 30 so that the basket 71 is moved by a predetermined amount Δy in the Y-axis direction when determining at Step C9 that a shift command is input from the robot controller 2, and subsequently transmits a shift completion signal to the robot controller 2 (Steps C10 and C11).

When the shift: completion signal is received by the robot controller 2, the flow advances from Step D7 to Step D8 where the robot controller 2 executes the aforementioned processing.

As described above, in a case where the basket is partially packed with one or more workpieces, the robot 1 is moved with the prescribed pitch Δx in the X-axis direction, and when the X-axis position of the robot 1 reaches the preset value Xe, the robot 1 is returned to the initial X-axis position Xs and the robot 30 holding the basket 71 is moved by the predetermined amount Δy in the Y-axis direction. Further, based on an image of the inside of the basket 71 picked up at each individual robot position, a height of uppermost workpiece surface at each robot position is determined, and whether or not the determined height is equal to the height at the initial robot position is determined at Step D9.

If the height of uppermost workpiece surface at the current robot position is different from (lower than) that at the initial robot position, it is determined that the next workpiece (a first workpiece for a case where the basket is initially packed with one or more workpieces) is to be packed into the basket 71 at the current robot position.

As apparent from the foregoing explanation, the positions of the robots 1, 30 for packing a first workpiece into the basket 71 are determined for both a case where the basket is empty and a case where the basket is partially packed with one or more workpieces.

Next, the robot controller 2 determines whether a stop command is input (Step D10), and further determines whether a machining completion signal is input from the processing machine 80 through the I/O signal line 33 (Step D11). Whereupon, the robot controller 2 enters a standby state for waiting the machining completion signal being input.

When the machining completion signal is input from the processing machine 80, the robot controller 2 operates the robot 1 to take out a machined workpiece from the processing machine 80 (Step D12), outputs a lift command to the robot controller 31 (Step D13), and awaits for a lift completion signal being transmitted from the robot controller 31 (Step D 14).

When determining at Step C8 that a lift command is received, the robot controller 31 operates the robot 30 to lift the basket 71 by a predetermined amount Δz (Step C12), and then transmits a lift completion signal to the robot controller 2 (Step C13).

In response to the lift completion signal being input, the robot controller 2 positions the robot 1 at a position whose X-axis position corresponds to a stored value in the register x and whose Y-axis position is at constant, and then corrects the previously detected position of uppermost workpiece surface to decrease by an amount corresponding to the lift amount Δz of the basket 71. Next, the robot controller 2 controls the robot 1 to place the workpiece in the basket 71, causes the robot 1 to move up to an image pickup position, and outputs a placement completion signal (Step D15).

In response to the placement completion signal being input (Step C14), the robot controller 31 causes the robot 30 to move down by the predetermined amount Δz by which, at Step C12, the robot 30 was moved up (Step C15). Subsequently, the flow returns to Step C5, and then determinations are made in sequence as to whether a container replacement command, stop command, return command, lift command, and shift command are input (Steps C5-C9).

The robot controller 2 adds a prescribed pitch Δx to a stored value in the register x (Step D16), and determines whether the renewed value in the register x is equal to or larger than a preset value Xe (Step D 17). If the renewed value is not equal to or larger than the preset value Xe, it is determined that a workpiece placement space whose X-axis position corresponds to the renewed value in the register x is present in the basket. Thus, the flow advances to Step D10, and the processing of Step D10 and subsequent Steps is performed to place a workpiece in that space.

On the other hand, if the renewed value in the register x is equal to or larger than the preset value Xe, it is determined that a further workpiece placement space is no longer available in the basket in the X-axis direction provided that the same basket height is maintained. In this case, the flow advances to Step D18 where a determination is made as to whether a stored value in the register y is larger than a preset value Ye indicating a limit number by which workpieces can be packed in the basket in the Y-axis direction (Step D 18). If the register value is not larger than the preset value Ye, the robot 1 is returned to the initial position Xs, a shift command is output to the robot controller 31, the stored value in the register y is incremented by 1, and the initial Xs is set in the register x (Step D19). Subsequently, when a shift completion signal is input (Step D25), the flow advances to Step D10. In response to the shift command being input, the robot controller 31 performs the processing of Steps C9-C11 to shift the basket 71 by a prescribed pitch Δy in the Y-axis direction, and then outputs a shift completion signal.

If it is determined at Step D18 that the stored value in the register y exceeds the preset value Ye, an image of the inside of the basket is picked up at the current robot position, and a height of uppermost workpiece surface is determined (Step D20). Then, whether the determined height exceeds a preset value is determined (Step D21). If the preset value is exceeded, it is determined that the basket 71 is full of workpieces W, and a container (basket 71) replacement command is output to the robot controller 31 (Step D23). If the height of uppermost workpiece surface does not exceed the preset value, the robot 1 is returned to the initial position Xs, a return command is output, the register y is set at a value of 0, and the initial position Xs is stored in the register x (Step D22). When a return completion is received (Step D24), the flow advances to Step D10.

When a replacement command is input (Step C5), the robot controller 31 operates the robot 30 so that the container (basket 71) is returned to the original position on the shelf, moves the robot 30 to a position of the shelf where an empty container (basket 71) is placed (Step C16), and executes the processing of Step C2 and subsequent Steps.

When receiving a return command from the robot controller 2 (Step C7), the robot controller 31 returns the basket 71 to the initial position, and transmits a return completion signal to the robot controller 2 (Step C18). To this end, the basket 71, located at the limit position when the return command is received, is moved back in the X- and Y-axis directions to the initial position, so that further workpiece packing may be started at the initial position.

When a stop command is input (Step C6), the robot controller 31 operates the robot 30 so that the container (basket 71) is returned to the original position on the shelf, moves the robot 30 to a standby position, and stops operating (Step C17).

As mentioned above, the object conveying system of the second embodiment is provided at the robot 1 with the visual sensor 10 for detecting the presence/absence of workpiece and a height of uppermost workpiece surface, so that workpieces may be packed into even a container (basket 71 or pallet 70) that is already partly packed with one or more workpieces. On the other hand, in case that an empty container (basket 71 or pallet 70) is always supplied to the system, it is possible for the system to pack workpieces into the container without the need of using the visual sensor 10, if a pattern of placing order of workpieces is determined in advance. In this case, the processing of Steps D3-D9 is unnecessary in the flow of FIG. 7, so that the flow advances from Step d2 directly to Step D10. The processing of Step D21 is so modified as to increment a count in a counter each time the answer to the determination at Step D18 becomes Yes, and to determine whether the count reaches a value indicating that the container is full of workpieces. The flow advances to Step D23 when the count reaches such a value, and advances to Step D22 if not so.

In case that the robot 1 has a relatively wide operation range, a Δy shift of the container (basket 71) may be made by the robot 1 instead of being made by the robot 30. In this case, the processing of Steps C9-C11 in FIG. 6 is removed, and the processing of Step D19 in FIG. 7 is modified to move the robot 1 by an amount of shift, instead of outputting a shift command. The container may be retained at a constant height without being lifted. In this case, the robot 30 should retain the container (basket 71) at a predetermined height for a long time, and therefore, after the container is once positioned at that height, it is preferable to apply brake to the respective axes of the robot 30 and bring the respective axis servomotors in a servo-off state to stop the operation of these servomotors. When the container (basket 71) is returned to the original position in the shelf, the axis servomotors are brought to a servo-on state to be enabled to operate, and brake applied to the servomotors is released.

Depending on the shape of conveyance objects to be packed into the container, the container may be rotated around its vertical axis by the robot 30, to ease the packing of the objects.

As in a modification of the first embodiment, a visual sensor may also be provided in the robot 30. When the pallet 70 or basket 71 is returned to or taken out from the shelf 60, the visual sensor detects a position/orientation of the pallet 70 or basket 71 and/or a position/orientation of the shelf, so that the returning and/or taking-out operation position of the robot 30 may be corrected.

As in another modification of the first embodiment, a signal indicating the number of components already packed or remaining in the container may be output to an external computer or a sequencer, so as to be utilized to monitor the state of production or to notify the timing of container replacement. Specifically, data indicating the number of workpieces packed in the container or the number of remaining workpieces in the container (i.e., the difference between the number of initially packed workpieces in the container and the number of workpieces already taken out therefrom) may be output to the outside. Alternatively, a signal may be output when the number of already packed workpieces is equal to or greater than a predetermined value or when the number of remaining workpieces is equal to or less than a predetermined value.

As in a modification of the first embodiment, when a workpiece container is placed on the shelf 60, the number of workpieces that can be housed in the container may be set to a register in the robot controller 31, and the robot controller 31 may increment the count in a counter that indicates the number of packed workpieces by 1 each time it receives a workpiece placement completion signal from the robot controller 2 at Step C14. Then the count in the counter, or the difference between this count and the value stored in the register indicating the number of packable workpieces may be output to an external computer or a sequencer.

Further, in order to notify of an external production control computer or a sequencer that the timing of container replacement is approached, an I/O signal may be output to them when a prescribed condition is satisfied in respect of the number of packed workpieces indicated by the counter or the aforesaid difference indicating the number of further packable workpieces. For instance, such I/O signal may be output when the number of packed workpieces is equal to or greater than a predetermined value or when the number of further packable workpieces is equal to or less than a predetermined value. The processing of outputting the I/O signal may be made at Step C 15.

The object conveying system may be configured such that, when there occurs any error (abnormality) that makes the robot 1 unable to continue the operation of taking out a component or conveyance object, the robot 30 can assist the robot 1 to recovery from the error. This prevents the system from stopping the operation, whereby continuous system operation can be ensured.

Referring to FIG. 4, at Step B9, the robot controller 2 corrects the position/orientation of the robot hand based on the position/orientation of a workpiece W determined at Step B5, and the workpiece W is held and taken out. At this time, if the corrected position/orientation of the robot hand exceeds the operation range of the robot 1, the workpiece taking-out operation of the robot 1 becomes impossible. If there is a large variation in position/orientation of workpieces randomly stacked in a basket, the robot cannot sometimes take the position/orientation required to perform the operation for taking out a workpiece, in particular when the workpiece is at a location away from the robot 1 such as near a wall portion of the basket or near the periphery of the field of view of the visual sensor 10, even though the position/orientation of the workpiece can be detected by the visual sensor.

In this case, the robot 30 is operated to move the container (basket 71) in such a direction that the position/orientation of the workpiece approaches a central part of the field of view of the visual sensor 10, and the robot 1 and the sensor 10 are operated to detect and take out the workpiece. This makes it possible to position the workpiece to fall within the operation range of the robot 1, whereby the robot 1 is enabled to continue to perform the workpiece taking-out operation.

If the position/orientation of the robot 1 to hold the detected workpiece W exceeds the operation range of the robot 1, the robot controller 2 determines that a robot motion to reach such position/orientation cannot be made, and an alarm state is raised in the program for operating the robot 1. At this time, as in ordinary robot controllers, the robot controller 2 starts an alarm program, and outputs a signal indicating that the workpiece removal is disabled to the robot controller 31, at Step B10, instead of outputting a workpiece removal completion signal.

By the alarm program, Steps B11 and B12 in FIG. 4 are skipped, the robot 1 is moved to an image capturing position, and Step B4 is entered again. Whereupon, the execution of the alarm program is completed, and the flow of FIG. 4 is resumed. When the robot controller 2 receives an image capturing permission signal at Step B4, the visual sensor detects a workpiece, and the robot 1 continues to take out the detected workpiece.

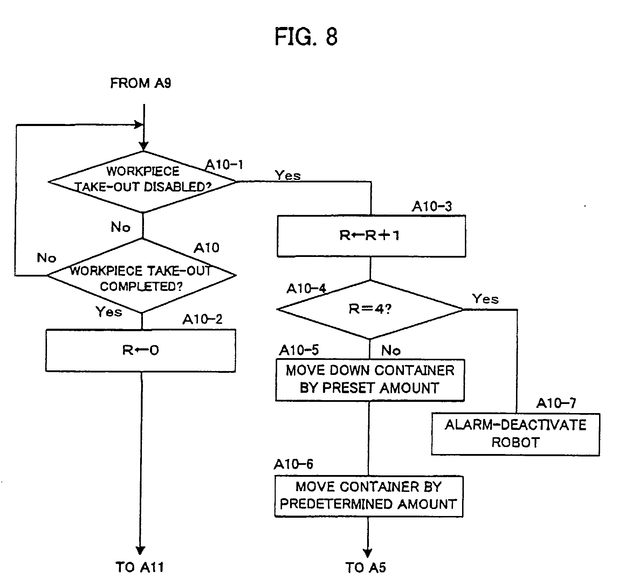

On the other hand, the robot controller 31 performs processing to assist the robot 1 to recovery from the workpiece removal disabled error. This processing basically corresponds to the processing shown in FIG. 3, but differs in that the processing shown in FIG. 8 is performed between Step A9 and Step A11 shown in FIG. 3.

In the assist processing, after completion of Step A9 to operate the robot 30 to hold a container (basket 71) in which workpieces are stored, the robot controller 31 determines whether a workpiece removal disabled signal is received (Step A10-1), and determines whether a workpiece removal completion signal is received (Step A10). When receiving the workpiece removal disabled signal from the robot controller 2, an error recovery program (Step A10-3 and subsequent Steps) is entered, in which a count of an internal counter R indicating the number of times by which error recovery has been made is incremented by 1 (Step A10-3). If the count of the counter R is not equal to a value of 4 (Step A10-4), the container (basket 71) is moved down by a preset amount by which the container was moved up at Step A8 in FIG. 3 (Step A10-5). Then, the robot 30 is operated to move the container by a predetermined amount (Step A10-6). This container movement is intended to set a workpiece to have a position/orientation that enables the robot 1 to take out the workpiece from the container. To this end, the container is moved horizontally such that a peripheral portion of the container gets closer to the center of the field of view of the visual sensor. Alternatively, the container is inclined by an angle to the extent that stacked workpieces do not collapse, in a manner decreasing an angle formed between the upper face of the workpiece and the optical axis of the sensor. An amount and direction of movement of the container may be selected from predetermined movement patterns in accordance with the count in the counter R. Alternatively, based on information on a position/orientation of the workpiece W that is detected from the image captured at Step B5, the container may be moved in a direction such that the workpiece W gets closer to the center of the field of view of the sensor and the inclination becomes smaller.

After changing the position of the container (Step A 10-6), the flow returns to Step A5 wherein the robot controller 31 outputs an image capturing permission signal to the robot controller 2 (Step S5). In response to this, under the control of the robot controller 2, the image capturing operation and the detection of workpiece position are repeated. If the workpiece removal is completed before the count of the counter R reaches a value of 4, the count is reset to 0 (Step A10-2)

If the count of the counter R reaches a value of 4 but the workpiece cannot be taken out even though the movement of container, the image capturing operation, and the detection of workpiece position are repeated, the robot 30 is alarm-deactivated and enters a standby state to await the operator's operation of error recovery and restoration (Step A10-7).

In the above, a case has been described in which the processing of error recovery is performed when the workpiece removal is disabled. A similar processing may be applied, if any abnormality occurs during the operation of packing a machined workpiece into a container in the second embodiment. To this end, the processing similar to the one shown in FIG. 8 may be applied between Step C13 and Step C15 of FIG. 6. In FIG. 8, Steps A9, A11 and A5 should be changed to Steps C13, C15 and C4, respectively.

In the first and second embodiments, although a case has been described by way of example where an unmachined workpiece taken out from a basket 71 is directly supplied to the processing machine 80 and a workpiece machined by the processing machine 80 is directly packed into a basket 71, it is possible to use a temporary placing table on which an unmachined workpiece taken out from the basket 71 is placed or a machined workpiece taken out from the processing machine is placed. The unmachined or machined workpiece placed on the temporary placing table is supplied to the processing machine or packed into the basket 71. In other words, an object conveying method of this invention may include a process of conveying the workpiece (object) to a temporary placing table, which process follows the object taking-out process, and may include a process of taking out a workpiece from the temporary placing table, which is followed by the process of packing the workpiece into the container (basket).

The just-mentioned method is advantageous in that the processing machine can be operated without dead time, in particular, in a case where the robot 1 alternately performs operations of supplying an unmachined workpiece to the processing machine and taking out a machined workpiece from the processing machine, whereas the robot 30 performs operations of taking out a basket full of unmachined workpieces or a basket for storing machined workpieces from the shelf, positioning the taken-out basket at a predetermined position within the operation range of the robot 1, and returning, to the shelf, a basket from which unmachined workpieces are fully taken out or a basket which becomes full of machined workpieces.

The operational sequence in which a temporary placing table is not utilized is as follows:

Upon completion of machining in the processing machine 80, the robot 1 takes out a machined workpiece from the processing machine 80, and packs the taken-out workpiece into a container held by the robot 30 for storing machined workpieces. The basket becoming full of machined workpieces is returned by the robot 30 to the original position on the shelf 60. The robot 30 takes out, from the shelf 60, a basket in which unmachined workpieces are stored, and positions the taken-out basket at a position within the operation range of the robot 1. Then, the robot 1 takes out an unmachined workpiece from the basket, and mounts it to the processing machine. Whereupon, the machining of the workpiece is started.

With the above sequence, when a basket becomes full of machined workpieces, the robot 30 returns it to the shelf, takes out from the shelf a new basket in which unmachined workpieces are stored, and positions the same at a predetermined position. Thus, it is necessary to replace the basket full of machined workpieces by the new basket storing unmachined workpieces, and hence the processing machine must be stopped from operating during the basket replacement.

On the other hand, the object conveying system performs the process of conveying an unmachined workpiece to a temporary placing table after it is taken out from a basket and/or the process of taking out a machined workpiece from the temporary placing table before it is packed into the basket. Accordingly, the robot 1 can convey workpieces between the processing machine and the temporary placing table, without the need of awaiting the robot 30 to replace a basket full of machined workpieces by a new basket storing unmachined workpieces. This makes it possible to shorten a period of time between completion of machining a workpiece and start of machining of the next workpiece, resulting in an improved production efficiency.

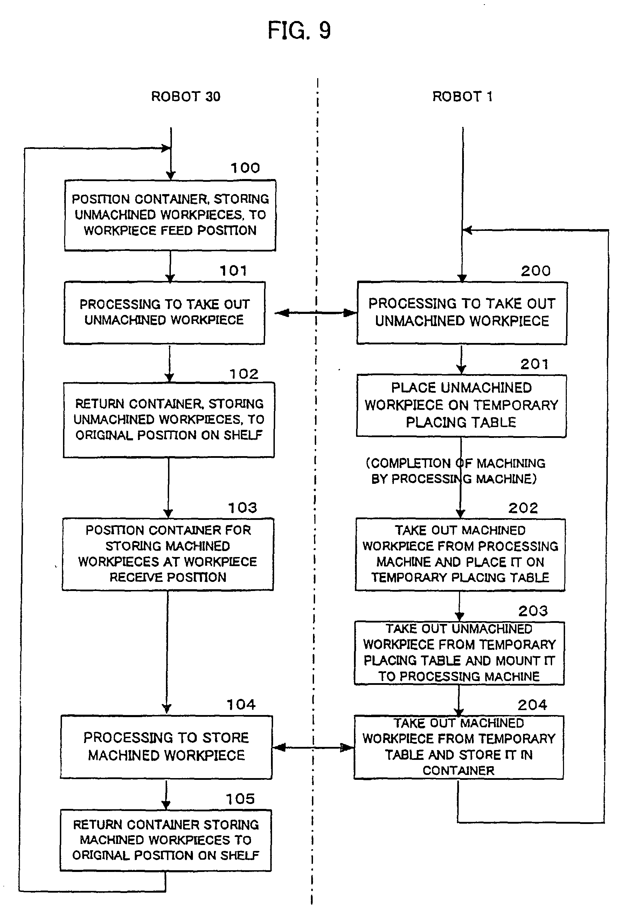

FIG. 9 is a flowchart showing an operational sequence according to a third embodiment of this invention, in which, utilizing a temporary placing table, the supply of an unmachined workpiece to the processing machine and the removal of a machined workpiece from the processing machine are alternately performed.

The system arrangement of the third embodiment is basically the same as the ones shown in FIGS. 1 and 2, but differs only in that a temporary placing table is provided within the operation ranges of the robots 30, 1.

At first, the robot 30 takes out, from the shelf 60, a container (basket 71) in which unmachined workpieces are stored, and positions the container to a workpiece feed position (Step 100). Then, the robots 30 and 1 cooperate with each other to take out an unmachined workpiece from the container. Specifically, the robot 1 takes out an unmachined workpiece from the container held by the robot 30 at the workpiece feed position (Steps 101, 200), and places the taken-out workpiece on the temporary placing table (Step 201).

Next, the robot 30 returns the container (basket 71) from which the unmachined workpiece has been taken out to its original position on the shelf 60 (Step 102), takes out from the shelf 60 a container for storing machined workpieces, and positions the container at a workpiece receive position (Step 103).

When receiving from a machining completion signal from the processing machine 80 or 81, the robot 1 takes out from the processing machine a workpiece having been machined, and places the workpiece on the temporary placing table (Step 202). Next, the robot 1 takes out an unmachined workpiece placed on the temporary placing table and mounts this workpiece to the processing machine 80 or 81 from which the machined workpiece has been taken out (Step 203).

The robots 30 and 1 cooperate with each other to perform the processing of packing the machined workpiece placed on the temporary placing table into the container (basket 71). Specifically, the robot 1 packs the machined workpiece into the container held at the workpiece receive position by the robot 30 (Steps 104, 204). Next, the robot 30 returns the container in which one or more machined workpieces are stored to its original position on the shelf (Step 105). Whereupon, the flow for the robot 30 advances to Step 100, whereas the flow for the robot 1 advances to Step 200.

The above is the outline of the conveying system which utilizes the temporary placing table for supply of unmachined workpiece and for removal of machined workpiece to and from the processing machine.

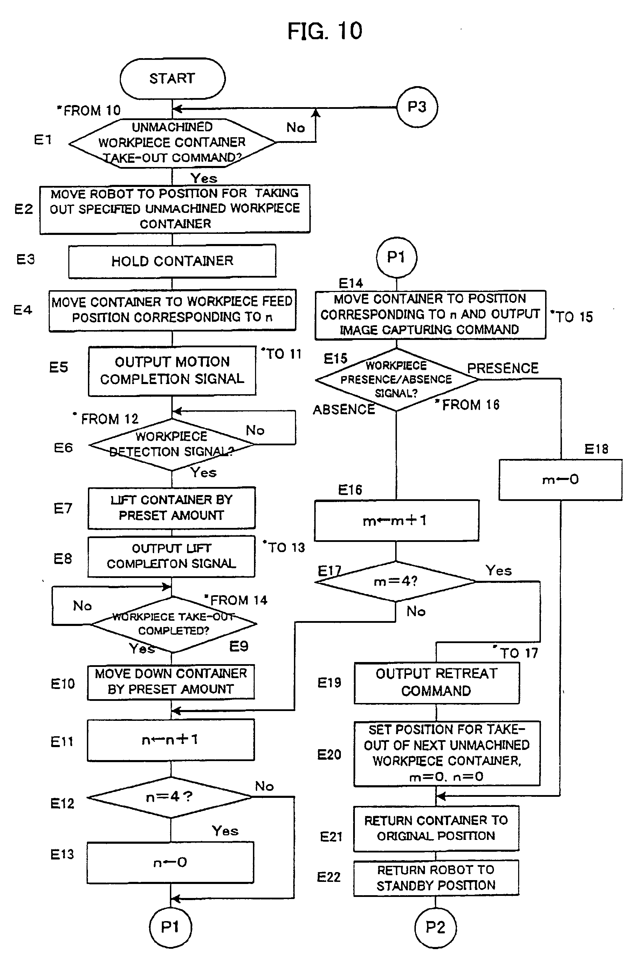

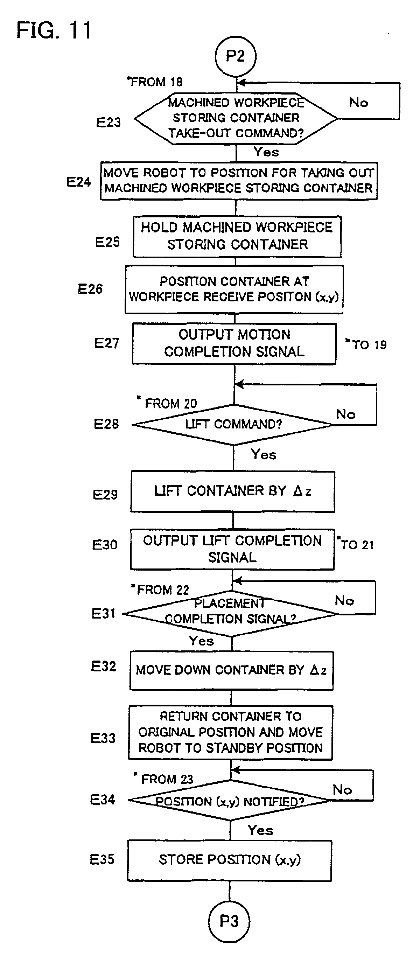

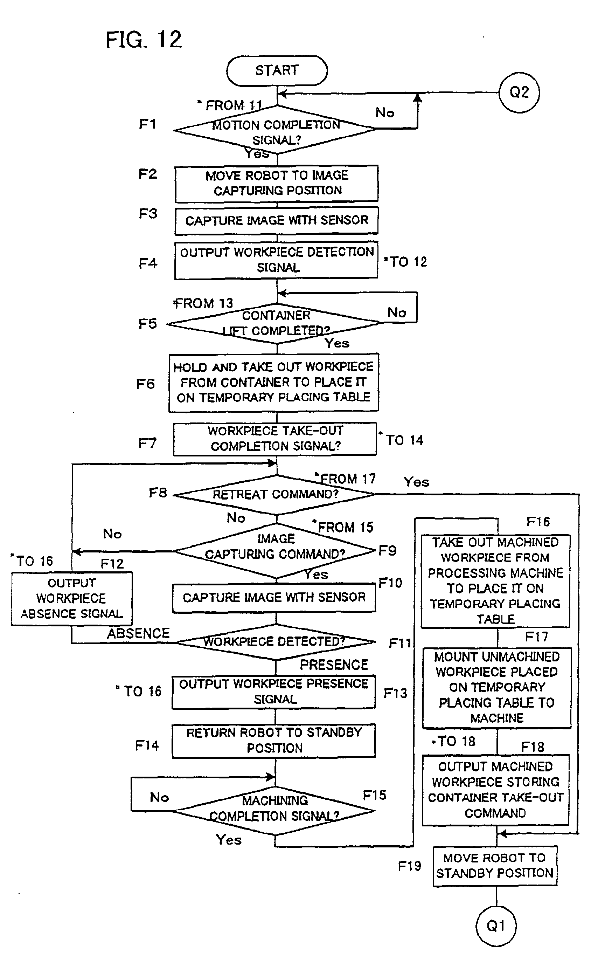

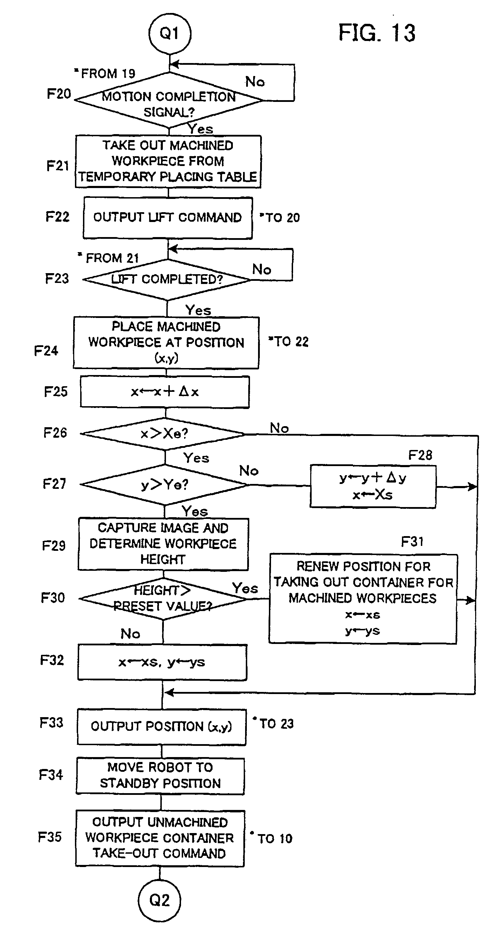

FIGS. 10-13 are flowcharts showing operational processing performed by robots in the conveying system, where FIGS. 10 and 11 are flowcharts showing the operational processing performed by the robot 30 that handles containers, and FIGS. 12 and 13 are flowcharts showing the operational processing performed by the robot 1 that handles workpieces.

The robot controller 31 determines whether an unmachined workpiece container take-out command is input (Step E1), and, if not so, awaits for this command being input. As mentioned later, this command is transmitted from the robot controller 2 through the I/O signal line. Meanwhile, such command is also produced automatically when a workpiece automatic replacement/conveyance command is input. When receiving the unmachined workpiece container take-out command, the robot controller 31 moves the robot 30 to a container take-out position for taking out a preset unmachined workpiece container, causes the robot hand 50 to hold it, operates the robot 30 to move the container so that a container region specified by index n is positioned at a workpiece feed position for the robot 1, and transmits a motion completion signal, indicating that the container has been moved to the feed position, to the robot controller 2 through the I/O signal line 32 (Steps E2-E5).

The robot controller 2 monitors whether the motion completion signal is transmitted (Step F1), and in response to the motion completion signal being transmitted, moves the robot 1 to an image capturing position (Step F2).
Then, an image is captured by the visual sensor 10, a position/orientation of a workpiece W is determined from the image (Step F2), and a workpiece detection signal is transmitted to the robot controller 31 through the I/O signal line 32 (Step F4). Then, the robot controller 2 awaits a lift completion signal indicating that the container (basket 71) has been lifted (Step F5). Since unmachined workpieces are stored in the container, at first, a workpiece W is detected without fail. Thereafter, a control is performed as mentioned later, so that a workpiece W may be detected without exception.

When receiving the workpiece detection signal (Step E6), the robot controller 31 operates the robot 30 to lift the container (basket 71) by a preset amount (Step E7). After completion of the container being lifted, a lift completion signal is transmitted to the robot controller 2 (Step E8).

In response to the lift completion signal being input (Step F5), the robot controller 2 corrects a position/orientation of the robot hand based on the position/orientation of workpiece W determined at Step F3, and operates the robot 1 to hold the detected workpiece W by the hand, take out the same from the container and place it on the temporary placing table (Step F6). Then, a workpiece removal completion signal is transmitted to the robot controller 31 (Step F7).

When receiving the workpiece removal completion signal (Step E9), the robot controller 31 operates the robot 30 to move down the container (basket 71) by the preset amount by which it was moved up at Step E7 (Step E10), and increments the index n by 1 (Step E11). If the index n is equal to 4 (Step E12), the index n is set to 0 (Step E 13). If the index n is not equal to 4, the flow advances to Step E14 where the robot 30 is operated to move the container (basket 71) horizontally so as to bring the center of a region, corresponding to the index n, of the container to be consistent with a predetermined position, so that this container region falls within the field of view of the visual sensor 10. Then, an image capturing command is transmitted to the robot controller 2 (Step E14).

The robot controller 2 determines whether a retreat command is transmitted and whether an image capturing command is transmitted (Steps F8 and F9), and in response to the image capturing command being input, operates the visual sensor 10 to capture an image. Then, a determination is made as to whether a workpiece W is detected (Steps F10 and F11), and if so, transmits a workpiece presence signal to the robot controller 31 (Step F13). If not so, a workpiece absence signal is transmitted to the robot controller 31 (Step F12).

When the robot controller 31 receives a workpiece absence signal at Step E15, i.e., if a workpiece is not detected in the container region just subject to the image capturing operation, the flow advances from Step E15 to Step E16 where the index m is incremented by 1, and whether the index m reaches a value of 4 is determined (Step E17). If not so, the flow advance to Step E11 and processing of Step E11 and subsequent Steps is performed. Thus, the robot controller 31 repeatedly carries out the processing of Steps E14-E17 and E11-E13 each time it receives the workpiece absence signal until the index m reaches a value of 4.

When a workpiece W is detected in the container region specified by the index n, so that the workpiece presence signal is received at Step E15, the index m is set to 0 (Step E18), the robot 30 is operated to return the container to the original position (Step E21), and the robot 30 is then returned to its standby position (Step E22). As a result, the index n corresponds to the container region in which a workpiece is detected, so that when the next unmachined workpiece is to be taken out, the container region specified by the index n is positioned so as to fall within the field of view of the visual sensor at Step E14.

On the other hand, when the index m reaches a value of 4 while no workpiece W is detected by the image capturing operation for four container regions, this indicates that no unmachined workpiece W is present in the container. Thus, the robot controller 31 outputs a retreat command for the robot 1 to the robot controller 2 (Step E19), sets the position for removal of the next unmachined workpiece container, and sets the indexes n and m to 0 (Step E20). Then, the flow advances to Step E21. Subsequently, a new container that stores unmachined workpieces is taken out, and the operation of taking out unmachined workpieces from the container is started from the first container region.

After outputting a workpiece presence signal (Step F13), the robot controller 2 returns the robot 1 to its standby position (Step F14), and awaits a machining completion signal being input from the processing machine 80 or 81 (Step F15).

In response to the machining completion signal being output from the processing machine 80 or 81, the robot 1 takes out a machined workpiece W from the processing machine to place the same on the temporary placing table (Step F16), and mounts an unmachined workpiece W placed on the temporary placing table to the processing machine 80 or 81 from which the machined workpiece has been taken out (Step F17). Then, a machined workpiece storing container take-out command is transmitted to the robot controller 31 (Step F18), and the robot 1 moves to its standby position (Step F19).

When receiving the machined workpiece storing container take-out command (Step E23), the robot controller 31 moves the robot 30 to a take-out position for taking out a specified container that is used to receive machined workpieces (Step E24), holds this container by the robot hand 50 (Step E25), and positions the container at a workpiece receive position (x, y) (Step E26). At the initial setting, the workpiece receive position (x, y) is first set to a start position (xs, ys).

Next, the robot controller 31 transmits a motion completion signal, indicating that the container has been moved to the workpiece receive position, to the robot controller 2 (Step E27), and awaits a lift command being input from the robot controller 2 (Step E28).

When receiving the motion completion signal (Step F20), the robot controller 2 takes out a machined workpiece from the temporary placing table, and outputs a lift command to the robot controller 31 (Steps F21 and F22).

When receiving the lift command (Step E28), the robot controller 31 lifts the container by a predetermined amount Δz, and transmits a lift completion signal (Steps E29 and E30).

In response to the lift completion signal (Step F23), the robot controller 2 operates the robot 1 to place the machined workpiece at the position (x, y) in the container, outputs a placement completion signal (Step F24), and starts the processing to determine whether a workpiece can be placed on the next placement position.

When receiving a placement completion signal (Step E31), the robot controller 31 moves down the robot 30 by the amount Δz by which it was moved up at Step E29 (Step E32), returns the container for storing machined workpiece to the original position (Step E33), and moves the robot 30 to a standby position. Then, the robot controller 31 awaits the position (x, y) being notified at which the next machined workpiece is to be placed (Step E34).

As mentioned above, the robot controller 2 starts, after outputting the placement completion signal (Step F24), the processing to determine whether a workpiece can be placed on the next placement. To this end, the robot controller 2 adds a prescribed pitch Δx to a currently stored value in the register x (Step F25), and determines whether the value in the register x exceeds a preset value Xe (Step F26). If the preset value Xe is not exceeded, this indicates that a workpiece placement space is present on a straight line in the X-axis direction, so that the flow advances to Step F33. If the preset value Xe is exceeded, this indicates that no workpiece placement space is present at the same height, so that the flow advances to Step F27 to determine whether a stored value in a register y exceeds a preset value Ye indicating a limit number by which workpieces can be packed in the Y-axis direction (Step F27). If the preset value Ye is not exceeded, the stored value in the register y is incremented by one pitch Δy, and the initial Xs is set in the register x (Step F28). Then, the flow advances to Step F33.

If it is determined at Step F27 that the stored value in the register y exceeds the preset value Ye, the operation of capturing an image is performed at the current position, a height of uppermost workpiece surface is determined (Step F29), and whether the height exceeds a preset value is determined (Step F30). If the preset value is exceeded, this indicates that the basket 71 is full of workpieces W. Thus, the registered position to specify a container (basket 71) which is to be taken out and into which machined workpieces are to be packed is renewed, the start positions xs and ys are stored in the registers x and y, respectively (Step F31), and the flow advances to Step F33.

If it is determined at Step F29 that the height does not exceed the preset value, the robot 1 is returned to the initial position xs, ys (Step F32), and the flow advances to Step F33.

At Step F33, the positions (x, y) stored in the registers x and y are transmitted to the robot controller 31. Then, the robot 1 is moved to the standby position (Step F34), an unmachined workpiece container take-out command is transmitted to the robot controller 31 (Step F35), and the flow returns to Step F1.

When being notified of the placeable position (x, y) (Step E34), the robot controller 31 stores the placeable position (x, y) (Step E35), and the flow returns to Step E1.

As explained above, in the conveying system of the third embodiment utilizing the temporary placing table, when the machining of a workpiece W by the processing machine 80 or 81 is completed, the machined workpiece is immediately taken out from the processing machine, and an unmachined workpiece is mounted to the processing machine. Thus, the dead time of the processing machine is shortened and the machining efficiency is improved.

The error recovery processing shown in FIG. 8 may also be applied to the third embodiment. In this case, the error recovery processing shown in FIG. 8 is inserted between Step E8 and Step E10 in FIG. 10 and between Step E30 and Step E32 in FIG. 11. The foregoing explanation can almost be applied to this modification, and hence further explanations will be omitted.

Although, In the third embodiment, the robot 1 performs the process of taking out unmachined workpieces from a container to place them on the temporary placing table and the process of taking out a machined workpiece from the processing machine to place the same on the temporary placing table, the temporary placing table may be utilized only either one of the two processes. For instance, unmachined workpieces taken out from a container may be placed on the temporary placing table, whereas a machined workpiece taken out from the processing machine may be immediately packed into another container. Alternatively, a machined workpiece taken out from the processing machine may be placed on the temporary placing table, whereas an unmachined workpiece taken out from a container may be immediately mounted to the processing machine.

The present invention makes it possible to effectively utilize a space for installation of containers such as pallet, basket, etc., and long-duration unattended operation can be realized by replacing containers by means of a robot. In addition, since the container is held by this robot, not only the provision of peripheral equipment for holding and positioning the container is unnecessary, but also the container can be held at a location above other equipment, making it possible to install various equipment in a narrow space, thereby achieving effective space utilization.

With the arrangement where a container is held by the robot, a position/orientation of the container can freely be varied by the program, so that another robot may easily take out and pack a workpiece from and into the container. By assigning to different robots the operation of holding a container and the operation of taking out/packing a conveyance object from/into the container to different robots, the operation of object conveyance can be made without being affected by limited operation ranges of these robots. Since the container is continuously held by the robot from when it is taken out for example from the shelf to when returned for example to the shelf, the time required for conveying the container can be shortened, thereby realizing the effective conveying system and method, as compared to conventional ones where a container such as pallet and basket placed on the floor, etc. is lifted and conveyed to a predetermined location, and subsequently the container placed at that location is moved back to the floor, etc.

## Claims

1. An object conveying system for conveying objects from a first process to a second process, comprising:
a first robot for holding and taking out a container containing objects positioned therein from the first process, and for conveying and positioning the held container at a predetermined position; and
a second robot for holding and taking out an object contained in the container held by said first robot and conveying the held object to the second process, said predetermined position being within an operation range of said second robot.

2. An object conveying system for conveying objects from a first process to a second process, comprising:
a first robot for holding and taking out a container containing objects from the first process, and for conveying and positioning the held container at a predetermined position; and
a second robot with a sensor, for holding and taking out an object contained in the container held by said first robot by recognizing a position and/or an orientation of the object using the sensor, and conveying the held object to the second process, said predetermined position being within an operation range of said second robot.

3. An object conveying system according to claim 1, wherein said first robot changes a position and/or an orientation of the held container for taking out of the object by said second robot.

4. An object conveying system according to claim 2, wherein said first robot changes a position and/or an orientation of the held container, for holding and taking out of an object by said second robot and/or for recognizing of the position and/or the orientation of the object using the sensor.

5. An object conveying system according to claim 1 or 2, wherein said first robot has a sensor mounted thereon, and holds the container based on a position of the container detected by the sensor.

6. An object conveying system according to claim 1 or 2, wherein when the object is taken out from the container, a signal indicating the number of objects taken out from the container or the number of objects remaining in the container is output to outside of the system.

7. An object conveying system according to claim 1 or 2, wherein when the object is taken out from the container, a signal is output to outside of the system, if the number of objects taken out from the container or the number of objects remaining in the container satisfies a predetermined comparison condition.

8. An object conveying system according to claim 1 or 2, wherein said second robot notifies said first robot that said second robot holds the object in taking out the object.

9. An object conveying system according to claim 1 or 2, wherein said second robot notifies the second process that said second robot holds the object or that said second robot reaches such a region that the second process has to start to make a preparation, in taking out the object.

10. An object conveying system according to claim 1 or 2, wherein said second robot takes out the object from the container, and conveys the taken object to a temporary placing table on which the taken object is temporally placed.

11. An object conveying system according to claim 1 or 2, wherein said first robot changes a position and/or an orientation of the held container so as to assist said second robot to eliminate an abnormality which is unable to be eliminated by the second robot in taking out the object from the container.

12. An object conveying system for conveying objects from a first process to a second process, comprising:
a first robot for holding and taking out a container from the second process, and for carrying and positioning the held container at a predetermined position; and
a second robot for sequentially holding and taking out objects from the first process and placing the objects in the container held by said first robot according to a predetermined pattern,
wherein said first robot conveys the container in which the objects are placed to the second process.

13. An object conveying system for conveying objects from a first process to a second process, comprising:
a first robot for holding and taking out a container from the second process, and for conveying and positioning the held container at a predetermined position; and
a second robot with a sensor, for sequentially holding and taking out objects from the first process and placing the objects in the container held by said first robot by recognizing a position at which the object is to be placed using the sensor,
wherein said first robot conveys the container in which the objects are placed to the second process.

14. An object conveying system according to claim 12, wherein said first robot changes a position and/or an orientation of the held container for placing of the object in the container by the second robot.

15. An object conveying system according to claim 13, wherein said first robot changes a position and/or an orientation of the held container for placing of the object in the container by said second robot and/or recognizing of the position in the container at which the object is to be placed using the sensor.

16. An object conveying system according to claim 12 or 13, wherein said first robot has a sensor mounted thereon, and conveys the container to the second process by recognizing a position at which the container is to be stored using the sensor.

17. An object conveying system according to claim 12 or 13, wherein when the object is placed in the container, a signal indicating the number of objects placed in the container or the number of objects remaining in the container is output to outside of said system.

18. An object conveying system according to claim 12 or 13, wherein when the object is placed in the container, a signal is output to outside of the system, if the number of objects placed in the container or the number of objects remaining in the container satisfies a predetermined comparison condition.

19. An object conveying system according to claim 12 or 13, wherein said second robot notifies said first robot that the object has been placed in the container.

20. An object conveying system according to claim 12 or 13, wherein said second robot takes out an object from a temporary placing table on which the object is temporally placed, and places the object in the container held by said first robot.

21. An object conveying system according to claim 12 or 13, wherein said first robot changes a position and/or an orientation of the held container so as to assist said second robot to eliminate an abnormality which is unable to be eliminated by the second robot in placing the object in the container.

22. An object conveying system according to claim 2, 5, 13 or 16, wherein the sensor comprises a visual sensor.

23. An object conveying system according to claim 2, 5, 13 or 16, wherein the sensor comprises a three-dimensional position sensor.

24. An object conveying method for conveying objects from a first process to a second process, comprising the steps of:
holding and taking out a container containing objects positioned therein from the first process, and conveying and positioning the held container at a predetermined position within an operation range of a second robot, using a first robot; and
holding and taking out an object contained in the container held by the first robot, and conveying the held object to the second process using the second robot.

25. An object conveying method for conveying objects from a first process to a second process, comprising the steps of:
holding and taking out a container containing objects from the first process, and conveying and positioning the held container at a predetermined position within an operation range of a second robot, using a first robot; and
holding and taking out an object contained in the container held by the first robot using a second robot by recognizing a position and/or an orientation of the object using a sensor provided at the second robot, and conveying the held object to the second process by the second robot.

26. An object conveying method according to claim 24, wherein said step of taking out the object by the second robot includes a step of changing a position and/or an orientation of the container held by the first robot.

27. An object conveying method according to claim 25, wherein said step of taking out the object by the second robot by recognizing the position and/or the orientation of the object by the sensor includes a step of changing a position and/or an orientation of the container held by the first robot.

28. An object conveying method according to claim 24 or 25, wherein said step of taking out the container by the first robot includes a step of holding the container based on a position of the container detected by a sensor mounted on the first robot.

29. An object conveying method according to claim 24 or 25, further including a step of outputting a signal indicating the number of objects taken out from the container or the number of objects remaining in the container when said step of taking out the object from the container by the second robot is performed.

30. An object conveying method according to claim 24 or 25, further including a step of outputting a signal, if the number of objects taken out from the container or the number of objects remaining in the container satisfies a predetermined comparison condition when said step of taking out the object from the container by the second robot is performed.

31. An object conveying method according to claim 24 or 25, wherein said step of taking out the object from the container by the second robot includes a step of notifying said first robot that said second robot holds the object.

32. An object conveying method according to claim 24 or 25, wherein said step of taking out the object from the container by the second robot includes a step of notifying the second process that said second robot holds the object or that said second robot reaches such a region that the second process has to start to make a preparation.

33. An object conveying method according to claim 24 or 25, wherein said step of taking out the object from the container and conveying the object to the second process by the second robot includes a step of conveying the object to a temporary placing table on which the taken object is temporally placed.

34. An object conveying method according to claim 24 or 25, further including a step of changing a position and/or an orientation of the container held by the first robot so as to assist the second robot to eliminate an abnormality which is unable to be eliminate by the second robot in taking out the object from the container.

35. An object conveying method for conveying objects from a first process to a second process, comprising:
holding and taking out a container from the second process, and for conveying and positioning the held container at a predetermined position using a first robot;
sequentially holding and taking out objects from the first process and placing the objects in the container held by said first robot according to a predetermined pattern, using a second robot; and
conveying the container in which the objects are placed to the second process by the first robot.

36. An object conveying method for conveying objects from a first process to a second process, comprising:
holding and taking out a container from the second process, and for conveying and positioning the held container at a predetermined position using a first robot;
sequentially holding and taking out objects from the first process and placing the objects in the container held by said first robot using a second robot by recognizing a position at which the object is to be placed using a sensor provided at the second robot; and
conveying the container in which the objects are placed to the second process by the first robot.

37. An object conveying method according to claim 35, further including a step of changing a position and/or an orientation of the container held by the first robot for placing the object in the container by the second robot.

38. An object conveying method according to claim 36, further including a step of changing a position and/or an orientation of the container held by the first robot for placing the object in the container by the second robot and/or for recognizing the position in the container at which the object is to be placed using the sensor.

39. An object conveying method according to claim 35 or 36, wherein said step of conveying the container to the second process by the first robot includes a step of recognizing a position at which the container is to be stored by a sensor mounted on the first robot.

40. An object conveying method according to claim 35 or 36, further including a step of outputting a signal indicating the number of objects placed in the container or the number of objects remaining in the container when the object is placed in the container.

41. An object conveying method according to claim 35 or 36, further including a step of outputting a signal if the number of objects placed in the container or the number of objects remaining in the container satisfies a predetermined comparison condition when the object is placed in the container.

42. An object conveying method according to claim 35 or 36, further including a step of notifying said first robot that the object has been placed in the container by the second robot.

43. An object conveying method according to claim 35 or 36, further including a step of taking out an object by the second robot from a temporary placing table on which the object is temporally held and placing the object in the container held by the first robot.

44. An object conveying method according to claim 35 or 36, further including a step of changing a position and/or an orientation of the container held by the first robot so as to assist the second robot to eliminate an abnormality which is unable to be eliminate by the second robot in placing the object in the container.

45. An object conveying method according to claim 25, 28, 36 or 39, wherein the sensor comprises a visual sensor.

46. An object conveying method according to claim 25, 28, 36 or 39, wherein the sensor comprises a three-dimensional position sensor.
